# FASCICULE DE BREVET EUROPEEN

(11) **EP 0 427 137 B1**
(45) Date de publication et mention de la délivrance du brevet: **24.01.1996**
(21) Numéro de dépôt: 90121032.8
(22) Date de dépôt: 02.11.1990
(51) Int. Cl.: G06F 13/40

(54) **Etage de sortie sur un lien série synchrone, en particulier pour carte d'interface numérique équipant un central téléphonique, et central téléphonique équipé de telles cartes d'interface**
Ausgangsstufe auf einer synchronen seriellen Leitung, insbesondere für numerische Schnittstellenkarte für Fernsprechanlage und Fernsprechanlage mit solcher Schnittstellenkarte
Output stage on a synchronous serial link, particularly for numerical interface card fitting telephone exchange, and telephone exchange fitted with such interface card

(30) Priorité: 08.11.1989 FR 8914664
(43) Date de publication de la demande: 15.05.1991
(73) Titulaire: ALCATEL BUSINESS SYSTEMS, F-75008 Paris (FR)
(72) Inventeur: Graouer, René, F-67000 Strasbourg (FR); Hoff, Jean, F-67700 Saint Jean Saverne (FR)
(74) Mandataire: Weinmiller, Jürgen

(56) Documents cités:
- US-A- 4 490 631
- WESCON'83, San Fransisco, CA, 8-11 novembre 1983, vol. 27, pages 26/4, 1-5; A.P.M.M.MOELANDS: "The I2C bus-an interconnect structure for integrated circuits"
- IBM TECHNICAL DISCLOSURE BULLETIN, vol. 30, no. 2, Juillet 1987, pages 580-581,New York, US; "CMOS off-chip drivers having short-circuit protection"
- THE BELL SYSTEM TECHNICAL JOURNAL, vol. 60, no. 7, septembre 1981, pages 1271-1287; Y.L. LEVENDEL et al.: "Accurate logic simulation models for TTL totempoleand MOS gates and tristate devices"

## Description

La présente invention se rapporte à un étage de sortie sur un lien série synchrone, en particulier pour carte d'interface numérique équipant un central téléphonique tel par exemple un central téléphonique à petite ou moyenne capacité, et à un central téléphonique à débit élevé et équipé de telles cartes d'interfaces.

Un central téléphonique privé à petite ou moyenne capacité, ou "INTERCOM", se présente sous la forme d'un rack électronique qui comporte plusieurs liens en fond de panier, dont en particulier un lien série synchrone de transmission de données numériques entre cartes, un fil d'horloge centralisée, et un fil d'occupation de la ligne couramment appelé BUSY, et qui comporte un certain nombre de cartes d'interface enfichables, dont des cartes "CPU" qui sont des cartes à microprocesseur de gestion des relations des différentes cartes entre elles, et des cartes "joncteurs" qui assurent la liaison avec des postes téléphoniques, des terminaux téléphoniques, des micro-ordinateurs, etc... et qui accèdent aux lignes situées en fond de panier au moyen d'un petit microprocesseur, moins élaboré que celui qui constitue l'ensemble d'une carte CPU.

Toutes ces cartes d'interface sortent sur la ligne de transmission de données entre cartes, ou "lien série synchrone", par un amplificateur de puissance couramment appelé "BUFFER". Il s'agit d'un amplificateur à deux transistors CMOS, dont un transistor de type n et un transistor de type p, qui, pour les Intercoms courants, peut débiter sur la ligne un courant de l'ordre quelques dizaines de milliampères.

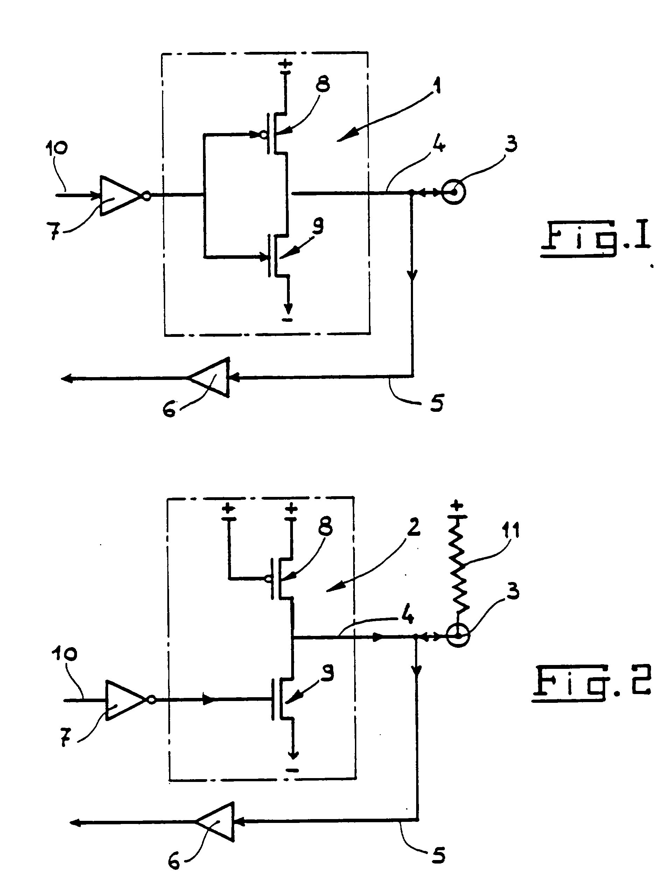

Les figures 1 et 2 jointes sont des rappels des deux schémas les plus classiques actuellement utilisés en technique CMOS comme circuits d'entrée/sortie pour ces cartes d'interface, la figure 1 étant un circuit utilisant un BUFFER 1 dit "totem pôle" et la figure 2 étant un circuit utilisant un BUFFER 2 dit "en fonctionnement DRAIN (ou collecteur) ouvert".

Sur ces deux figures, la référence 3 désigne la ligne de transmission des données numériques entre cartes, dit "lien série synchrone". L'accès de la carte sur cette ligne 3 est bidirectionnel, l'émission se faisant sur le fil de sortie 4 de l'amplificateur de puissance BUFFER, 1 ou 2, et la réception se faisant sur le fil 5 d'entrée d'un petit amplificateur 6 de remise à niveau. Classiquement, chacun des étages de sortie, 1 ou 2, est attaqué à travers un préamplificateur-inverseur 7.

Chacun de ces amplificateurs de puissance, 1 ou 2, est en technique classique CMOS, constitué de deux transistors de puissance complémentaires, dont :
. un transistor 8, de type p, dont le collecteur est relié à la borne positive d'alimentation, et dont l'émetteur est relié au collecteur de l'autre transistor 9 ; et
. cet autre transistor 9, de type n, dont l'émetteur est relié à la borne 0 volt ou référence d'alimentation.

Dans le cas du BUFFER totem pôle 1, les grilles des deux transistors de puissance 8 et 9 sont reliées entre elles, ainsi qu'à la sortie du préamplificateur 7.

Dans le cas du BUFFER en collecteur ouvert 2, seule la grille du transistor 9 est reliée à la sortie du préamplificateur d'émission 7, alors que la grille du transistor 8 est reliée à la borne positive d'alimentation, de sorte que ce dernier transistor est toujours bloqué.

Le fonctionnement de ces deux circuits de sortie est le suivant :

Dans le cas de l'application d'un niveau 0 (valeur de la tension référence d'alimentation) sur l'entrée 10 du préamplificateur inverseur 7, un niveau 1 (valeur de la tension positive d'alimentation) est appliqué au BUFFER, 1 ou 2. Dans le cas du BUFFER totem pôle 1, ce niveau 1 entraîne le blocage du transistor 8 et la saturation du transistor 9, un niveau 0 apparaissant sur la sortie 4, et le temps de commutation étant assez rapide (de l'ordre de quelques nanosecondes à plusieurs dizaines de nanosecondes selon la charge à piloter).

Dans le cas du BUFFER en DRAIN ouvert 2, ce niveau 1 entraîne la saturation du transistor 9, de sorte que là aussi le niveau 0 apparaît sur la sortie 4, avec un temps de commutation aussi rapide que dans le cas du BUFFER 1.

Les choses sont tout à fait différentes dans le cas de l'application d'un niveau 1 sur l'entrée 10 du préamplificateur 7. Dans ce cas, le niveau 0 qui est alors appliqué sur l'entrée du BUFFER entraîne :
. dans le cas du BUFFER 1, le blocage du transistor 9 et la saturation du transistor 8, et par suite l'apparition d'un niveau 1 en 4, avec un temps de commutation toujours aussi rapide ; mais
. dans le cas du BUFFER 2, le blocage du transistor 9, les deux transistors étant alors bloqués, et l'apparition en 4 d'un niveau 1, par charge de la capacité en ligne par l'intermédiaire de la résistance de charge 11, dite "de pull-up", classiquement branchée entre la borne positive d'alimentation et la ligne 3 : le temps de commutation, qui dépend de la capacité en ligne et de la résistance 11 (qui ne peut pas être trop faible pour ne pas surcharger l'alimentation) est alors beaucoup plus élevé.

Un BUFFER totem pôle tel que celui de la figure 1, s'il a l'avantage d'entraîner des temps de commutation rapides, a pour principal inconvénient de ne pas être utilisable dans le cas où plusieurs interfaces sont aptes à vouloir accéder ensemble sur la ligne 3. Si en effet deux interfaces veulent l'une forcer la ligne à 0, et l'autre la forcer à 1, l'alimentation se trouve court-circuitée entre le transistor de type p de l'une et le transistor de type n de l'autre, qui sont tous deux saturés, ce qui n'est bien évidemment pas admissible. Un tel phénomène d'accès simultané de plusieurs interfaces peut se produire lors de la phase dite "de résolution de contention" qui est mise en oeuvre lorsque, le fil d'occupation "BUSY" étant à un (ce qui est, dans notre exemple, son signal de non-occupation de la ligne), plusieurs interfaces désirent émettre un message, sur la ligne de transmission locale d'informations 3. Ce n'est que lorsque cette contention est résolue, et que le "maître" sur la ligne est alors déterminé, qu'il y a accès d'une seule carte-interface sur cette ligne.

En revanche, l'utilisation d'un BUFFER en DRAIN ouvert, selon la figure 2, est tout à fait possible pendant une phase d'accès simultané sur la ligne, avec pour résultat qu'il apparaît sur cette ligne nécessairement un zéro si au moins une des interfaces veut forcer celle-ci à zéro, et qu'il n'y apparaît un niveau 1 que lorsque toutes les interfaces désirant l'accès veulent émettrent un 1 ce qui se traduit par le blocage des 2 transistors n et p, le niveau 1 étant "tiré" par la résistance 11.

L'inconvénient d'un tel BUFFER en DRAIN ouvert est son temps de commutation élevé en cas d'application d'un niveau 1, ce qui limite le débit du lien série synchrone, à une valeur de l'ordre du Mégabits pour les BUFFERS couramment utilisés. Pour diminuer ce temps de commutation, et donc augmenter le débit, il faudrait diminuer d'autant la résistance de charge 11, et par suite d'une part augmenter la puissance de chaque BUFFER, en le remplaçant par un autre plus onéreux, et d'autre part accepter une consommation bien plus élevée.

US-A-4 490 631 montre deux étages de sortie comprennant chacun deux transistors complémentaires pouvant fonctionner, selon l'état d'un signal de commande, soit en "totem pôle", soit en "collecteur ouvert". En fonctionnement "collecteur ouvert", l'application du signal d'entrée à l'un des deux transistors est court-circuitée.

L'invention vise à remédier à l'inconvénient indiqué ci-dessus. Elle se rapporte à cet effet à un étage de sortie sur un lien série synchrone, en particulier pour pour carte d'interface numérique équipant un central téléphonique, cet étage de sortie comportant un amplificateur du genre "BUFFER" à deux transistors de puissance substantiellement complémentaires, la grille (ou la base) d'un de ces transistors étant directement reliée à l'entrée de cet amplificateur, tandis que la grille (ou la base) de l'autre transistor est reliée à la sortie d'un multiplexeur apte à relier, sous commande d'un signal représentatif de la phase de résolution de contention lors d'un accès multiple de cartes-interfaces sur ce lien série synchrone, cette dernière grille à une tension continue de blocage de cet autre transistor pendant cette phase de résolution de contention pour faire fonctionner ce BUFFER en "DRAIN ouvert", et à l'entrée de cet amplificateur pour faire fonctionner ce même BUFFER en "totem pôle" lorsque, cette phase de résolution étant écoulée, seul le "maître" accède sur ce lien série synchrone.

De toute façon l'invention sera bien comprise, et ses avantages et autres caractéristiques ressortiront, lors de la description suivante d'un exemple non limitatif de réalisation, en référence au dessin schématique annexé, dans lequel :
- Figure 3 est un schéma électrique de cet étage de sortie;
- Figure 4 est un schéma synoptique de la liaison en fond de panier entre les cartes d'interface d'un central téléphonique ; et
- Figure 5 est un diagramme des temps explicatif du dispositif de l'invention.

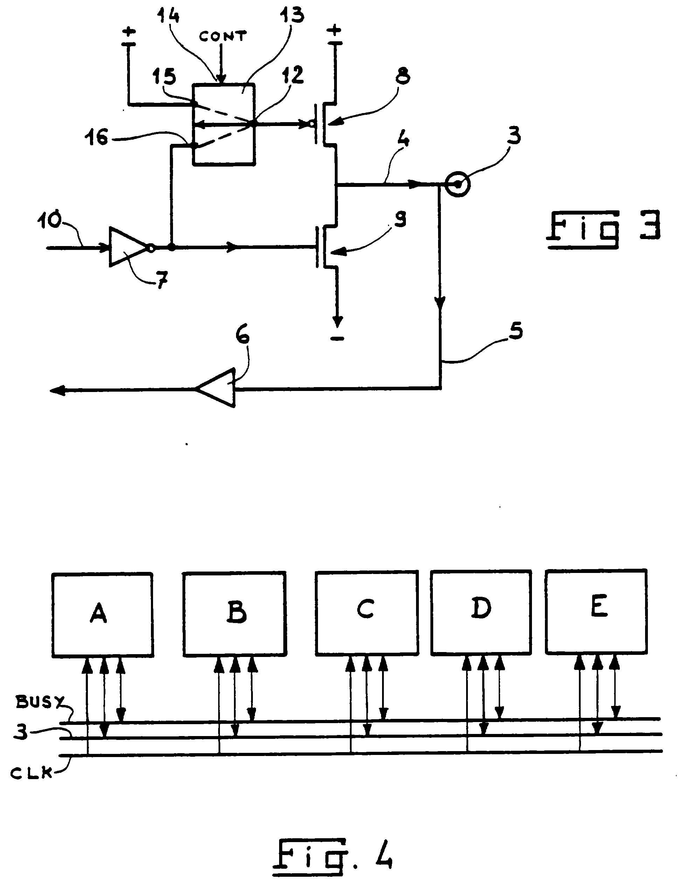

En se référant à la figure 3, cet étage de sortie à BUFFER se différentie de ceux précédemment décrits aux figures 1 et 2 par le fait que la grille du transistor 8, de type p, est reliée à la sortie 12 d'un multiplexeur 13 à deux entrées 15, 16, et une sortie. Ce multiplexeur 13 reçoit, sur son entrée de commande 14, un signal CONT de commande de commutation qui, par définition, est à zéro, comme il sera expliqué ci-après, pendant la phase de résolution de contention, et qui passe à 1 en dehors de cette phase.

Lorsque ce signal CONT est à zéro, il commande le multiplexeur 13 de sorte que sa sortie 12 soit reliée à son entrée 15, qui est, quant à elle, reliée à la borne positive d'alimentation : le BUFFER 8, 9 fonctionne alors en collecteur ouvert, comme on le voit par comparaison avec le circuit de la figure 2. Il apparaît donc bien, que pendant la phase de résolution de contention, le circuit de la figure 3 comporte un BUFFER de sortie fonctionnant en DRAIN ouvert.

En revanche, lorsque ce signal CONT passe à 1, immédiatement après la fin de la phase de résolution de contention, la borne de sortie 12 est reliée à la borne d'entrée 16, elle-même connectée à la base du transistor 9 : le BUFFER 8, 9 fonctionne alors en totem pôle, à l'instar du circuit de la figure 1. Après cette phase de contention, le circuit de la figure 3 comporte donc un BUFFER de sortie fonctionnant en totem pôle, de sorte que le circuit de la figure 3 fonctionne finalement de manière optimale : en DRAIN ouvert pendant la phase de résolution de contention (accès multiple possible sur la ligne), et en totem pôle lors de la transmission d'informations par le maître sur la ligne (accès unique sur cette ligne).

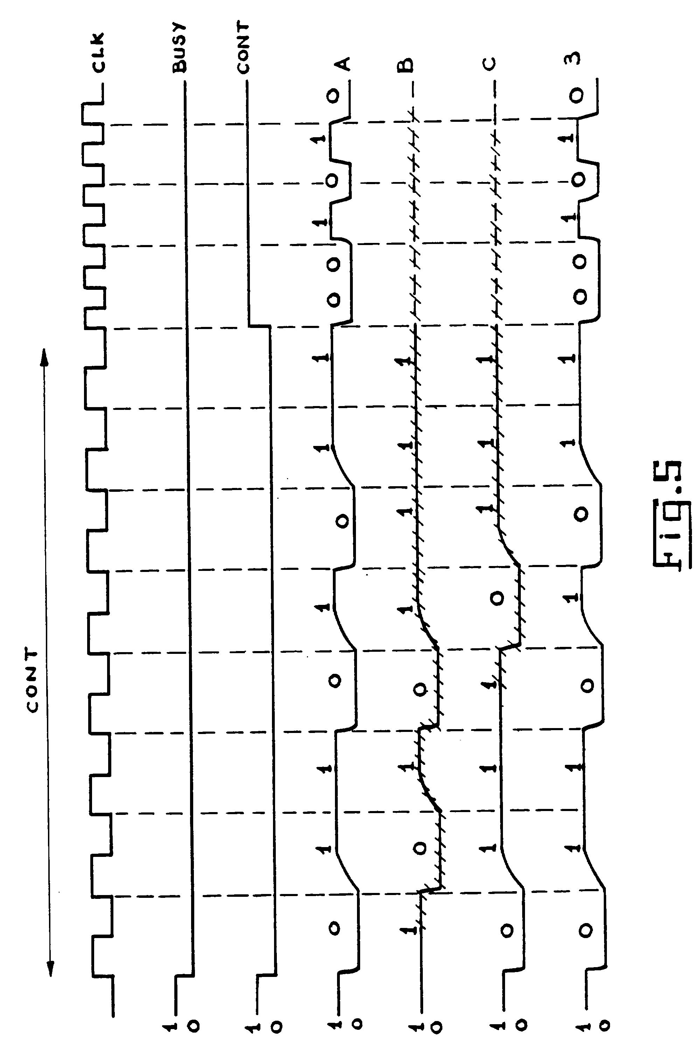

Les figures 4 et 5 montrent comment le circuit de la figure 3 peut avantageusement être utilisé pour réaliser une augmentation de débit sur un lien série synchrone (ligne 3) sur lequel la contention est résolue par DRAIN ouvert.

En se référant à la figure 4, il s'agit d'un central téléphonique privé, dont seule une portion est représentée, cette portion comprenant :
- Un ensemble de cartes enfichables A, B, C, D, E, ..., dont des cartes de calcul genre "CPU" (Central Processor Unit), par exemple la carte A, et des cartes "joncteurs" (par exemple les cartes B à E) qui sont liées à des appareils téléphoniques, terminaux téléphoniques, ou micro-ordinateurs (non représentés). Chaque carte-joncteur B, C, D, E est équipée d'un petit microprocesseur d'entrée/sortie, de sorte que les cartes A, B, C,..., constituent chacune une interface à microprocesseur de ce type.
- Un bus local d'interconnexion et transmission 3, constitué par un fil unique, ou lien, bidirectionnel et situé en fond de panier.
- Un fil d'occupation, appelé BUSY, qui est également bidirectionnel et qui permet, de manière connue en soi, d'indiquer aux autres interfaces si le lien de transmission 3 est occupé. Ce fil d'occupation sert aussi de signal de synchronisation de message.
- Un fil d'horloge CLK qui reçoit son signal en provenance d'un générateur de signal d'horloge centralisé (non représenté), et qui applique ce signal à toutes les interfaces.

La figure 5 représente, du haut vers le bas :
. La forme du signal d'horloge CLK qui, comme on le voit sur ce diagramme est à une fréquence relativement basse (par exemple 1 Mégahertz) pendant la phase CONT de résolution de contention, et est à une fréquence nettement plus élevée (par exemple 2 Mégahertz) lorsque, la contention étant résolue, il y a transmission de trame par le "maître".
. Le signal BUSY d'occupation de la ligne, qui est à 1 lorsque cette ligne est libre, et qui passe à 0 dès qu'au moins une interface désire l'accès sur la ligne.
. Le signal CONT précité, qui est à zéro pendant la phase de résolution de contention, et qui est à 1 en dehors de cette phase (uniquement pour celui qui est devenu le maître).
. Les signaux que souhaitent en même temps émettre sur la ligne les trois interfaces A, B, C par exemple.
. Le signal effectivement émis sur la ligne 3.

Pendant la phase de résolution de contention CONT, chacune des interfaces A, B, C, désirant l'accès sur la ligne émet, à la fréquence d'horloge 1 Mégahertz, un octet qui lui est propre, dit "octet de contention". C'est cet octet qui va déterminer la priorité sur la ligne, et donc qui est le "maître". Il s'agit d'un octet qui, par définition, est différent pour chaque interface et dont, dans cet exemple non limitatif d'octet de contention :
. les cinq derniers bits (en "poids forts") sont des bits de position géographique, qui sont fixes et qui caractérisent chacun l'interface considérée ; et
. les trois premiers bits (en "poids faibles") sont des bits de priorité variables qui tournent en décrémentation binaire après chaque collision.

Il convient à ce stade de bien rappeler que, les circuits de sortie selon la figure 3 fonctionnant en DRAIN ouvert pendant la phase de résolution de contention CONT, il suffit qu'un seul des signaux émis par A, B, ou C, soit un zéro pour que la ligne 3 soit forcée à zéro.

La séquence de contention est alors la suivante :

Sur le front de montée du premier coup d'horloge sur lequel les signaux BUSY et CONT sont forcés à zéro (tout à gauche sur les diagrammes), les interfaces A et C appliquent un zéro sur la ligne, tandis que l'interface B veut y appliquer un 1 : la ligne 3 est donc forcée à zéro.

Sur le front de descente de ce même coup d'horloge s'effectuent les opérations de lecture par les interfaces (fils de relecture 5 et préamplificateurs de relecture 6). L'interface B, qui constate qu'un zéro (et non pas le 1 qu'elle voulait émettre) est effectivement émis sur la ligne, cesse alors d'émettre, comme indiqué par les hachures sur le diagramme B. Les interfaces A et C, qui ont toutes deux relu le zéro qu'elles avaient émis, continuent d'émettre.

Sur le front de montée du second coup d'horloge, les deux signaux A et C passent à 1, avec temps de commutation élevé, et il en est de même sur la ligne 3.

Tout reste à 1 au prochain coup d'horloge.

En revanche, sur le front de montée du troisième coup d'horloge, l'interface A force la ligne 3 à zéro. Sur le front de descente de ce troisième coup d'horloge, l'interface C, qui relit un zéro alors qu'elle a émis un 1, abandonne à son tour, de sorte que A reste seule le "maître", et continue seule à émettre sur la ligne 3, la contention étant donc déjà résolue à ce stade.

Il convient de bien faire remarquer que cette contention est nécessairement résolue à la fin du signal CONT (lorsque ce signal repasse à 1), du fait que les octets de contention sont par définition tous différents.

A la fin du signal de contention CONT, le "maître", A dans notre exemple, commande le passage du signal d'horloge CLK à sa valeur supérieure (2 Mégahertz), de sorte que le message est émis à cette fréquence : ceci est rendu possible par le fait que le circuit de la figure 3 fonctionne alors en totem pôle, avec temps de commutation rapides.

Comme il va de soi, l'invention n'est pas limitée à l'exemple de réalisation qui vient d'être décrit, mais est bien au contraire susceptible d'être mise en oeuvre sous de multiples formes équivalentes.

## Revendications

1. Etage de sortie sur un lien série synchrone (3), en particulier pour interface numérique (A, B, C, D, E,...) équipant un central téléphonique, cet étage de sortie comportant un amplificateur du genre "buffer" à deux transistors de puissance substantiellement complémentaires (8, 9), la grille ou la base de l'un (9) de ces transistors étant reliée à l'entrée (7, 10) de cet amplificateur, caractérisé en ce que la grille ou la base de l'autre transistor (8) est reliée à la sortie (12) d'un multiplexeur (13) apte à relier, sous commande d'un signal représentatif de la phase de résolution de contention lors d'un accès multiple de cartes-interfaces (A, B, C,...) sur ce lien série synchrone (3), cette dernière grille ou base à une tension continue (+) de blocage de cet autre transistor (8) pendant cette phase de résolution de contention pour faire fonctionner ce buffer en "drain ou collecteur ouvert", et à l'entrée (7, 10) de cet amplificateur (8, 9) pour faire fonctionner ce même buffer en "totem pôle" lorsque, cette phase de contention étant écoulée, seul le "maître" (A) accède sur ce lien série synchrone (3) .

2. Central téléphonique comportant des cartes interfaces (A, B, C, D, E,...) aptes à échanger des informations par l'intermédiaire d'un lien série synchrone (3), caractérisé en ce que chacune de ces cartes-interfaces accéde sur ce lien (3) par un étage de sortie selon la revendication 1 et en ce que le central est équipé de moyens pour augmenter la fréquence de l'horloge de transmission, et par suite le débit émis sur ce lien série synchrone (3), lorsque la phase de résolution de contention est terminée.

## Patentansprüche

1. Ausgangsstufe zu einer synchronen Serienverbindung (3), insbesondere für eine digitale Schnittstelle (A, B, C, D, E, ...) in einer Telefonzentrale, wobei die Ausgangsstufe einen sogenannten Pufferverstärker mit zwei im wesentlichen komplementären Leistungstransistoren (8, 9) enthält und das Gate oder die Basis eines dieser Transistoren (9) an den Eingang (7, 10) dieses Verstärkers angeschlossen ist, dadurch gekennzeichnet, daß das Gate oder die Basis des anderen Transistors (8) an den Ausgang (12) eines Multiplexers (13) angeschlossen ist, der unter Steuerung durch ein für die Konfliktschlichtungsphase bei einem Mehrfachzugriff von Schnittstellenkarten (A, B, C, ...) auf diese synchrone Serienverbindung (3) repräsentatives Signal dieses Gate oder diese Basis an eine Sperrgleichspannung des anderen Transistors (8) während der Konfliktschlichtungsphase, um diesen Puffer mit offenem Drain oder Kollektor zu betreiben, und dieses Gate oder diese Basis an den Eingang (7, 10) des Verstärkers (8, 9) anschließen kann, um den Puffer als "Totem-Pol" zu betreiben, wobei nach der Konfliktschlichtungsphase nur der "Meister" (A) auf diese synchrone Serienverbindung (3) Zugang hat.

2. Telefonzentrale mit Schnittstellenkarten (A, B, C, D, E ..), die Informationen über eine synchrone Serienverbindung (3) auszutauschen vermögen, dadurch gekennzeichnet, daß jede der Schnittstellenkarten auf diese Verbindung (3) über eine Ausgangsstufe nach Anspruch 1 zugreift, und daß die Zentrale mit Mitteln zur Erhöhung der Frequenz des Übertragungstaktes und infolgedessen des über diese synchrone Serienverbindung gesendeten Durchsatzes (3) versehen ist, wenn die Konfliktschlichtungsphase beendet ist.

## Claims

1. An output stage to a synchronous serial link (3), in particular for a digital interface (A, B, C, D, E, ...) in a telephone exchange, said output stage including a buffer type amplifier having two substantially complementary power transistors (8, 9), with the grid or base of one of the these transistors (9) being connected to the input (7, 9) of said amplifier, the output stage being characterized in that the grid or base of the other transistor (8) is connected to the output (12) of a multiplexer (13) suitable for connecting said grid (or base) to a D.C. voltage (+) for switching said other transistor (8) off under the control of a signal representative of a contention-resolving stage during multiple accesses of the interface cards (A, B, C, ...) on the synchronous serial link (3), said other transistor being switched off during a contention-resolving stage in order to cause the buffer to operate in open drain or collector mode, with the multiplexer otherwise connecting the grid or base of said other transistor (8) to the input (7, 10) of said amplifier to cause said buffer to operate in totem pole mode when said contention stage has elapsed, with only the "master" interface (A) then accessing the synchronous serial link (3).

2. A telephone exchange including interface cards (A, B, C, D, E, ...) suitable for interchanging data via a synchronous serial link (3), the telephone exchange being characterized in that each of the interface cards accesses said link (3) via an output stage according to claim 1, and in that the exchange is fitted with means for increasing the transmission clock frequency and consequently the rate at which data is transmitted over said synchronous serial link (3) whenever said contention-resolving stage is not applicable.
